# EUROPEAN PATENT APPLICATION

(11) **EP 4 094 975 A1**
(43) Date of publication of application: **30.11.2022**
(21) Application number: 21176710.8
(22) Date of filing: 28.05.2021
(51) Int. Cl.: B60L 53/30, B60L 53/31

(54) **A HIGH-POWER CHARGING STATION FOR ELECTRIC VEHICLES**

(71) Applicant: ABB E-mobility B.V., 2629 JG Delft (NL)
(72) Inventor: Lega, Marco, I-67047 Rocca di cambio (AQ) (IT); La Rosa, Cristoforo Emanuele, I-52025 Montevarchi (AR) (IT)
(74) Representative: De Bortoli, Eros

(57) **Abstract**

An electric charging station for electric vehicles, which comprises:
- one or more charging modules (2), each charging module comprising a switching unit and at least a pair of charging porta including a first charging port and a second charging port electrically connected to said switching unit, each charging port being electrically connectable to an electric vehicle for charging an electric battery of said electric vehicle;
- one or more feeding assemblies (3), each feeding assembly being electrically connected to an electric grid and to a charging module, said feeding assembly including one or more feeding modules, each feeding module including one or more power conversion means to convert AC electric power into DC electric power.
The charging station comprises one or more pairs of power transmission buses (4, 5), each pair of power transmission buses comprising a first power transmission bus electrically connected to a first feeding port of said feeding assembly and to said switching unit and a second power transmission bus electrically connected to a second feeding port of said feeding assembly and to said switching unit.

## Description

The present invention relates to the field of the electric charging stations for electric vehicles (EV). In particular, the present invention relates to a high-power charging station for electric vehicles, i.e. a charging station designed to provide an output power higher than 50 kW DC for EV charging purposes.

As it is known, high-power electric charging stations for electric vehicles may include one or more power cabinets and one or more charging posts.

Each power cabinet is electrically connected to an electric grid (e.g. the mains) and it is basically designed to convert AC electric power received in input into DC electric power to feed a charging post.

Each power cabinet has a feeding port and it may be electrically connected to a given charging post through a power transmission bus or, possibly, to another power cabinet to increase the available electric power at the above-mentioned feeding port.

Each charging post is basically designed to interface with at most a pair of electric vehicles for charging the electric batteries of these latter. To this aim, charging posts generally include at least a pair of charging ports, each electrically connectable to an electric vehicle through a suitable electric cable.

In order to be suitably fed, each charging post is electrically connected to a power cabinet through a power transmission bus electrically connected to the feeding port of the power cabinet.

A relevant drawback of traditional high-power charging stations consists in that, even if a charging post is electrically connected to two electric vehicles at the same time, these electric vehicles cannot be charged in parallel.

In fact, currently available charging arrangements of the state of the art are not capable of feeding two electric vehicles at the same time while maintaining these latter electrically insulated one from another, as required by international standards.

Additionally, traditional charging arrangements are not suitable for managing in parallel charging processes requiring different levels of charging current and voltage depending on the state of charge and configuration of the battery of the electric vehicle to be charged.

The main aim of the present invention is to provide an electric charging station for electric vehicles that allows solving or mitigating the above-mentioned technical problems.

More particularly, it is a purpose of the present invention to provide an electric charging station for electric vehicles having a high level of flexibility in use.

Another purpose of the present invention to provide an electric charging station ensuring high level performances in terms of safety, reliability and efficiency.

A further object of the present invention is to provide an electric charging station that can be easily manufactured at industrial level, at competitive costs with respect to the solutions of the state of the art.

In order to fulfill these aim and purposes, the present invention provides an electric charging station for electric vehicles, according to the following claim 1 and the related dependent claims.

In a general definition, the present invention related to an electric charging station for electric vehicles, which comprises:
- one or more charging modules. Each charging module comprises a switching unit and at least a pair of charging porta including a first charging port and a second charging port. The charging ports are electrically connected to said switching unit and are each electrically connectable to an electric vehicle for charging an electric battery of said electric vehicle;
- one or more feeding assemblies. Each feeding assembly is electrically connected to an electric grid and to a charging module. Each feeding assembly includes one or more feeding modules. Each feeding module includes power conversion means to convert AC electric power received from an electric grid into DC electric power to be used for feeding said charging module.

The charging station, according to the invention, comprises one or more pairs of power transmission buses.

Each pair of power transmission buses comprises a first power transmission bus electrically connected to a first feeding port of a feeding assembly and to the switching unit of a charging module.

Each pair of power transmission buses further comprises a second power transmission bus electrically connected to a second feeding port of said feeding assembly and to said switching unit.

The above-mentioned first and second power transmission buses are electrically isolated one from another and are arranged in parallel to connect electrically the corresponding feeding assembly to the corresponding charging module.

According to the invention, the switching unit of each charging module is adapted to carry out connecting or disconnecting functionalities between the respective charging ports and power transmission buses.

In particular, for each pair of charging ports of a charging module, the switching unit of said charging module is adapted to:
- connect or disconnect electrically the first power charging port to or from the first power transmission bus;
- connect or disconnect electrically the first power charging port to or from both the first and second power transmission buses;
- connect or disconnect electrically the second power charging port to or from the second power transmission bus 5;
- connect or disconnect electrically the second power charging port to or from both the first and second power transmission buses.

Preferably, the switching unit is commanded to take different switching configurations by control means of the respective charging module. In particular, for each pair of charging ports of a charging module, the switching unit of said charging module is adapted to take:
- a first switching configuration, in which the switching unit electrically connects the first charging port to the first power transmission bus and it electrically disconnects the first and second charging ports from the second power transmission bus; or
- a second switching configuration, in which the switching unit electrically connects the second charging port to the second power transmission bus and it electrically disconnects the first and second charging ports from the first power transmission bus; or
- a third switching configuration, in which the switching unit electrically connects the first charging port to both the first and second power transmission buses and it electrically disconnects the second charging port from both the first and second power transmission buses; or
- a fourth switching configuration, in which the switching unit electrically connects the second charging port to both the first and second power transmission buses and it electrically disconnects the first charging port from both the first and second power transmission buses;
- a fifth switching configuration, in which the switching unit electrically connects the first charging port to the first power transmission bus, electrically disconnects the first charging port from the second power transmission bus, electrically connects the second charging port to the second power transmission bus and electrically disconnects the second charging port from the first power transmission bus;
- a sixth switching configuration, in which the switching unit electrically disconnects both the first and second charging ports from both to the first and second power transmission buses.

Preferably, the switching unit includes, for each pair of charging ports of a charging module, a switching circuit having:
- a first terminal and a second terminal electrically connected to the first charging port and the second charging port, respectively;
- a first electric node and a second electric node electrically connected to the first power transmission bus and the second power transmission bus, respectively;
- a first switch having power terminals electrically connected between the first electric node and the first terminal;
- a second switch having power terminals electrically connected between the second electric node and the second terminal;
- a third switch having power terminals electrically connected between the first and second electric nodes.

According to an aspect of the invention, each feeding assembly comprises a first main feeding module and a second main feeding module electrically connected to the charging module. The first and second main feeding modules include the first and second feeding ports, respectively. Preferably, the first feeding module is enclosed in a first self-standing power cabinet, the second feeding module is enclosed in a second self-standing power cabinet, while the charging module is enclosed in a self-standing charging post.

According to possible variant embodiments, the first and second feeding modules may be enclosed in a same power cabinet.

According to further possible variant embodiments, the first and second feeding modules and the respective charging module operatively associated thereto may be enclosed in a same cabinet structure.

According to some embodiments of the invention, each feeding assembly comprises one or more additional feeding modules electrically connected to the first main feeding module or the second main feeding module or both the first and second main feeding modules.

Preferably, the first feeding module is enclosed in a first self-standing power cabinet, the second feeding module is enclosed in a second self-standing power cabinet, the charging module is enclosed in a self-standing charging post and each additional feeding module is enclosed in a corresponding self-standing power cabinet.

According to other possible embodiments, however, two or additional feeding modules may be enclosed in a same cabinet structure, optionally together with each of the main feeding modules and, possibly, with the respective charging module operatively associated thereto.

According to another aspect of the invention, each feeding assembly comprises a single main feeding module electrically connected to a respective charging module. The single main feeding module conveniently includes both the first and second feeding ports.

According to possible embodiments, the main feeding module and the charging module are enclosed in a same cabinet structure.

According to other possible embodiments, however, the main feeding module is enclosed in a self-standing power cabinet while the charging module is enclosed in a self-standing charging post.

In a further aspect, the present invention related to an electric charging facility for electric vehicles, according to the following claim 11.

Further characteristics and advantages of the invention will become apparent from the detailed description of exemplary embodiments of the slipring unit, which is illustrated only by way of non-limitative examples in the accompanying drawings, wherein:
- figures 1 schematically shows the electric charging station, according to the invention;
- figure 2 schematically shows a particular aspect of the electric charging station, according to the invention;
- figures 3-8 schematically show the operation of the electric charging station, according to the invention;
- figures 9-15 schematically show further embodiments of the electric charging station, according to the invention.

With reference to the cited figures, the present invention relates to an electric charging station 1 for electric vehicles.

As mentioned above, the electric charging station 1 is a high-power electric charging station, i.e. a charging station designed to provide an output power higher than 50 kW DC.

The charging station 1 is particularly suitable for being installed in an electric charging facility for electric vehicles. This latter may therefore include one or more electric charging stations, according to the invention.

According to the invention, the electric charging station 1 includes one or more charging modules 2.

In operation, each charging module 2 can be electrically connected to one or two electric vehicles for charging their electric batteries.

Each charging module 2 comprises a switching unit 25 and at least a pair of charging ports, which includes a first charging port 21 and a second charging port 22 electrically connected to said switching unit.

According to the embodiments of the invention shown in the cited figures, a charging module 2 comprises a single pair of charging ports 21, 22. In the following, for the sake of simplicity reference is made to these embodiments of the invention only, without intending to limit the scope of the invention in any way.

According to variant embodiments of the invention (not shown), in fact, a charging module 2 may comprise multiple pairs of charging ports.

In operation, each charging port 21, 22 of a charging module 2 can be electrically connected to an electric vehicle.

Conveniently, each charging module 2 comprises an electric cable 23 electrically connected to each charging port 21, 22 and an electric plug 24 electrically connected to each electric cable 23. The electric plug 24 is intended to be electrically and mechanically coupled to a corresponding electric plug of an electric vehicle.

The charging ports 21, 22 and the electric cables and plugs 23, 24 operatively coupled thereto, which are part of a charging module 2, may be designed according to a given well-known standard, e.g. CHAdeMO, CCS, and the like. For this reason, hereinafter, they will be described in relation to the aspects of interest of the invention only, for the sake of brevity.

Preferably, each charging module 2 comprises first control means 20.

Conveniently, the control means 20 are designed to control the operation of the corresponding switching unit 25, as it will better explained in the following. However, the control means 20 can carry out also other control functionalities (here not disclosed for the sake of brevity) related to the operation of the charging module 2.

Preferably, the control means 20 comprise one or more communication ports or interfaces for communicating with other modules or components (e.g. the corresponding feeding modules) or for communicating with external equipment (e.g. the electric vehicles) both in a wired and wireless manner.

The control means 20 may conveniently include one or more computerized units, each including suitable data or signal processing resources of digital and/or analog type. Preferably, each charging module 2 comprises an HMI (Human-Machine Interface) 29.

The HMI 29 is conveniently configured to allow a user to interact with the charging module 2 (e.g. for paying the electric energy consumed to recharge the batteries of an electric vehicle). Conveniently, the HMI 29 is designed to interact with the control means 20 in such a way to exchange data and control signals with these latter.

In general, the control means 20 and the HMI 29 of a charging module 2 may be realized according to solutions of known type. For this reason, hereinafter, they will be described in relation to the aspects of interest of the invention only, for the sake of brevity.

According to the invention, the electric charging station 1 includes one or more feeding assemblies 3, each electrically connected to an electric grid 100 (preferably an AC electric grid, e.g. the mains) and to a charging module 2.

Each feeding assembly 3 includes one or more feeding modules 31, 32, 39.

Each feeding module 31, 32, 39 includes, in turn, power conversion means 38 adapted to convert AC electric power received from the electric grid 100 into DC electric power to be used for feeding a corresponding charging module 2, when this latter is coupled to at least an electric vehicle.

The above-mentioned power conversion means 38 may conveniently include one or more AC/DC power conversion units, each including suitable power switches and data or signal processing resources of digital and/or analog type.

The feeding modules 31, 32, 39 of a feeding assembly 3 are electrically connected to the electric grid 100 through suitable AC ports (not shown), according to solutions of known type. Each feeding assembly 3 comprises one or more main feeding modules 31, 32 that are electrically connected to the charging module 2 through suitable feeding ports.

Each feeding assembly 3 may further comprise one or more additional modules 39, each of which may be electrically connected to a main feeding module 31, 32 or to another additional module through suitable feeding ports (not shown) or switch matrixes, according to solutions of known type.

Preferably, each feeding module 31, 32, 39 of the feeding assembly 3 comprises second control means 30.

Conveniently, the control means 30 of each feeding module are designed to control the operation of the corresponding power conversion means 38. The control means 30 of each feeding module 31, 32, 39 may however carry out other control functionalities related to the operation of said feeding module.

Preferably, the control means 30 of each feeding module comprise one or more communication ports or interfaces for communicating with other modules or components of the charging station 1, in particular with the charging module 2 and/or other feeding modules.

The control means 30 of each feeding module may conveniently include one or more computerized units, each including suitable data or signal processing resources of digital and/or analog type.

Preferably, the control means 30 of a main feeding module 31 are capable of communicating with the control means 20 of a corresponding charging module 2 through a communication bus 300. Conveniently, such a communication bus is configured to ensure a galvanic separation e.g. a fiber optic CAN bus).

Preferably, the control means 30 of each feeding module may communicate with the control means of another feeding module through a communication bus 301 (e.g. of the CAN type).

In general, the control means 30 and the communication buses 300, 301 of each feeding assembly 3 may be realized according to solutions of known type. For this reason, hereinafter, they will be described in relation to the aspects of interest of the invention only, for the sake of brevity.

Also the communication between the feeding modules 31, 32, 39 of each feeding assembly and the corresponding charging module 2 may be realized in practice according to solutions of known type. As an example, the control means of the main feeding module 31, which is configured to communicate with a corresponding charging module 2, may operate as a master device while the control means of the remaining feeding modules 32, 39 and of the charging module 2 may operate as slave devices.

According to the invention, each feeding assembly 3 comprises a first feeding port 36 and second feeding port 37 adapted to provide in output DC electric power for feeding the charging module 2, when this latter is coupled to one or two corresponding electric vehicles.

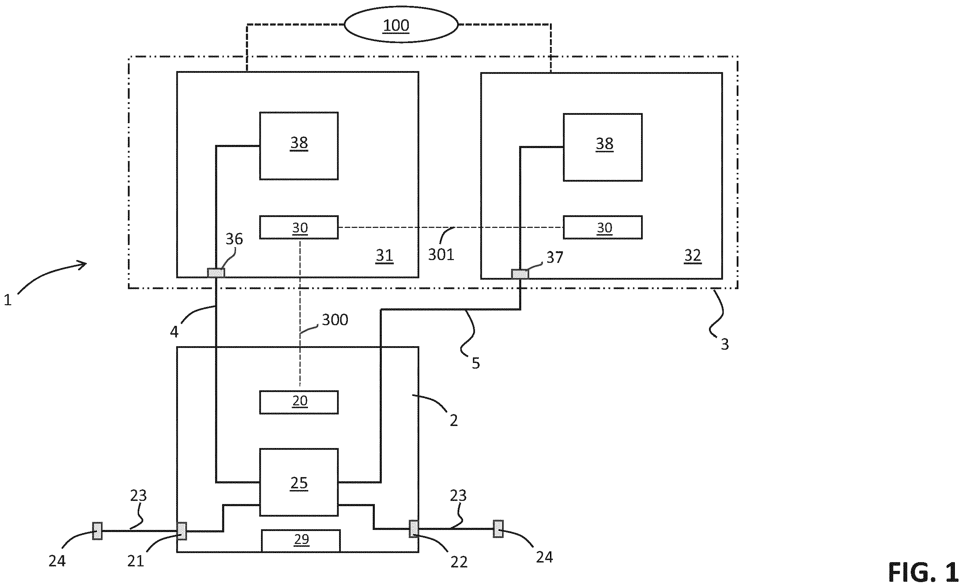

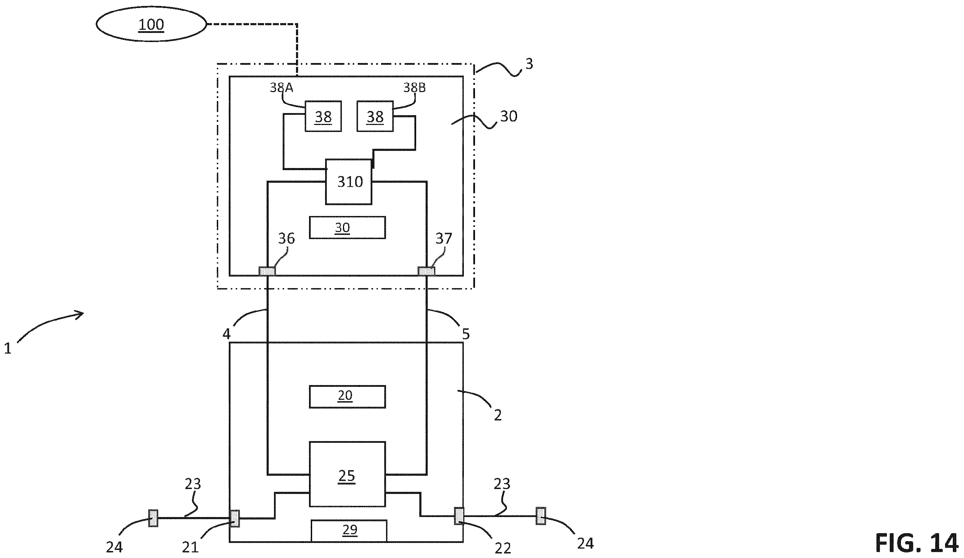

In general, the feeding ports 36, 37 of a feeding assembly 3 are electrically connected to the power conversion means 38 of this latter. As it will better emerge from the following, the first and second feeding ports 36, 37 may be included in a same main feeding module 31 of the feeding assembly 3 (figure 14) or be included in a first main feeding module 31 and a second main feeding module 32, respectively (figures 1, 8-13).

An important feature of the invention consists in that the charging station 1 comprises one or more pairs of power transmission buses 4, 5.

Each pair of power transmission buses comprises a first power transmission bus 4, which is electrically connected to the first feeding port 36 of a feeding assembly 3 and to the switching unit 25 of a corresponding charging module 2, and a second power transmission bus 5, which is electrically connected to the second feeding port 37 of the feeding assembly 3 and to the switching unit 25 of the charging module 2.

The above-mentioned first and second power transmission buses 4, 5 are electrically isolated one from another and are arranged in parallel to connect electrically the feeding assembly 3 to the charging module 2.

Another important feature of the invention consists in that the switching unit 25 of each charging module 2 is adapted to connect or disconnect electrically the charging ports 21, 22 of the charging module 2 with or from the corresponding power transmission buses 4, 5 in such a way to selectively convey the DC electric power provided by the power transmission buses towards a charging port or another.

In particular, the switching unit 25 of each charging module 2 is adapted to:
- connect or disconnect electrically the first power charging port 21 to or from the corresponding first power transmission bus 4;
- connect or disconnect electrically the first power charging port 21 to or from both the corresponding first and second power transmission buses 4, 5;
- connect or disconnect electrically the second power charging port 22 to or from the corresponding second power transmission bus 5;
- connect or disconnect electrically the second power charging port 22 to or from both the corresponding first and second power transmission buses 4, 5.

As it will better emerge from the following, the switching unit 25 of each charging module 2 comprises a plurality of switches (e.g power MOSFETs) electrically connecting the charging ports 21, 22 and the power transmission buses 4, 5.

The switches of the switching unit 25 are controllable by the control means 20 of the corresponding charging module, which can command them to take opposite operating conditions, namely an interdiction state (OFF) or a conduction state (ON).

Depending on the operating conditions taken by said switches upon receiving suitable control signals from the control means 20, the switching unit 25 may take a given switching configuration.

Preferably, the switching unit 25 of each charging module 2 is adapted to take a number of different switching configurations in order to carry out the above-mentioned connecting or disconnecting functionalities between the charging ports 21, 22 and the power transmission buses 4, 5.

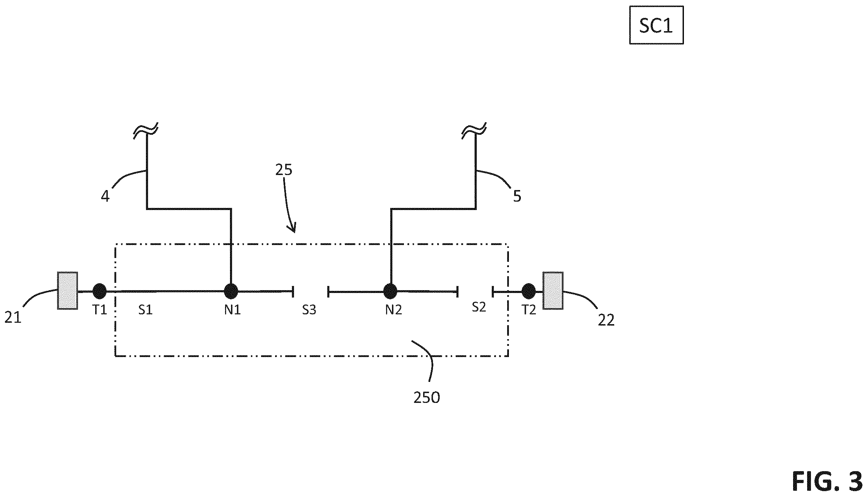

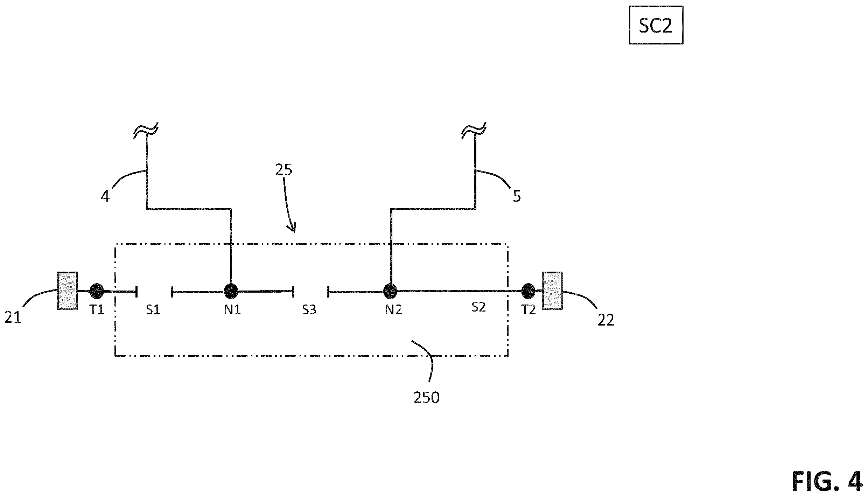

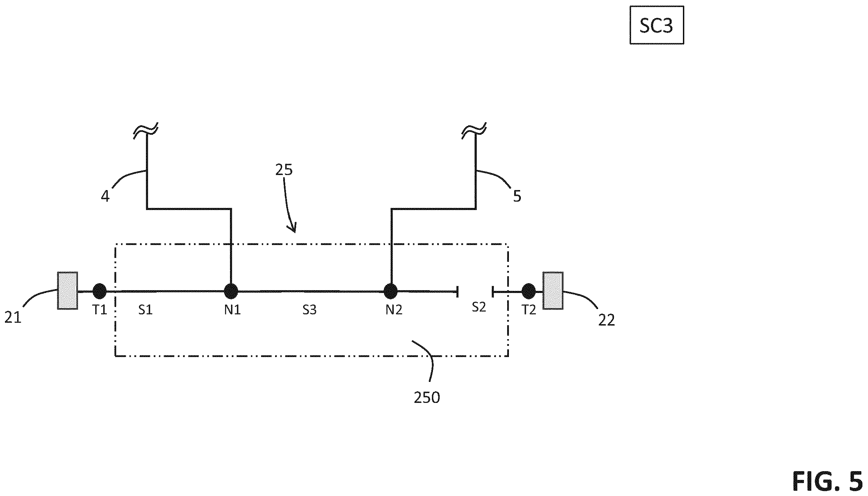

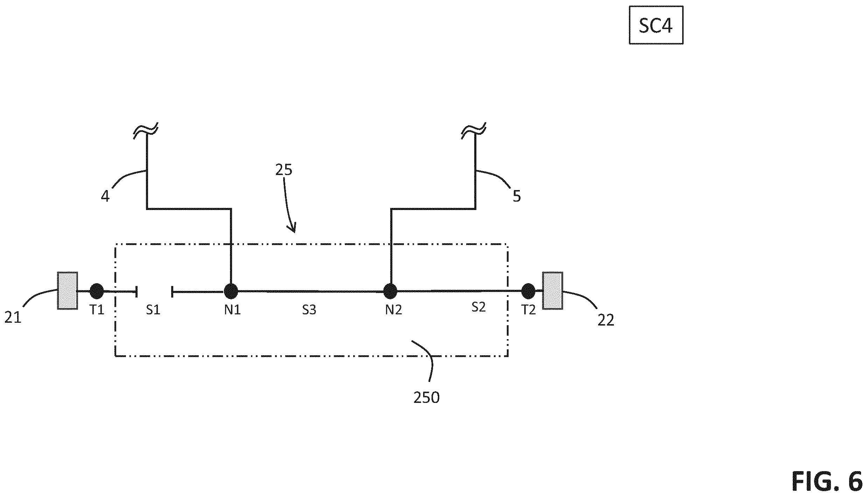

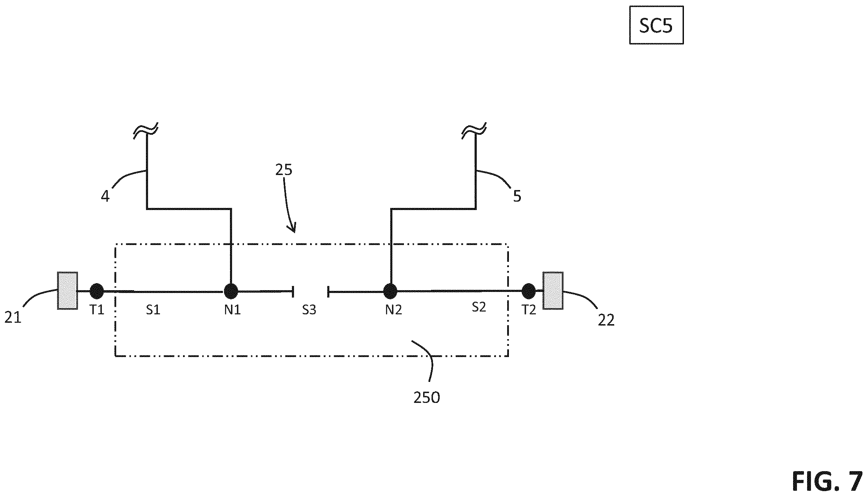

In particular, the switching unit 25 of each charging module 2 is adapted to take:
- a first switching configuration SC1, in which the switching unit 25 electrically connects the first charging port 21 to the corresponding first power transmission bus 4 and electrically disconnects the first and second charging ports 21, 22 from the corresponding second power transmission bus 5 (figure 3); or
- a second switching configuration SC2, in which the switching unit 25 electrically connects the second charging port 22 to the corresponding second power transmission bus 5 and electrically disconnects the first and second charging ports 21, 22 from the corresponding first power transmission bus 4 (figure 4); or
- a third switching configuration SC3, in the switching unit 25 electrically connects the first charging port 21 to both the corresponding first and second power transmission buses 4, 5 and electrically disconnects the second charging port 22 from both the corresponding first and second power transmission buses 4, 5 (figure 5); or
- a fourth switching configuration SC4, in which the switching unit 25 electrically connects the second charging port 22 to both the corresponding first and second power transmission buses 4, 5 and electrically disconnects said first charging port 21 from both the corresponding first and second power transmission buses 4, 5 (figure 6);
- a fifth switching configuration SC5, in which the switching unit 25 electrically connects the first charging port 21 to the corresponding first power transmission bus 4, electrically disconnects the first charging port 21 from the corresponding second power transmission bus 5, electrically connects the second charging port 22 to the corresponding second power transmission bus 5 and electrically disconnects the second charging port 22 from the corresponding first power transmission bus 5 (figure 7);
- a sixth switching configuration SC6, in which said switching unit 25 electrically disconnects both the first and second charging ports 21, 22 from both to the corresponding first and second power transmission buses 4, 5.

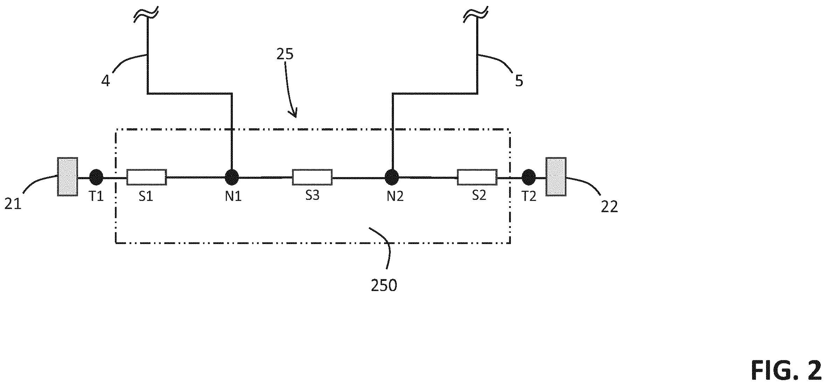

In general, the switching unit 25 of each charging module 2 is commanded to take one of the above-mentioned switching configurations depending on the DC electric power to be provided in output by each charging port 21, 22. In turn, the DC output power to be provided by each charging port 21, 22 basically depends on whether a single electric vehicle or two electric vehicles are electrically connected to the charging module 2 or on the operating conditions of the electric vehicle or electric vehicles electrically connected to the charging module 2. Figure 2 shows a preferred embodiment of the switching unit 25 of a charging module 2. Preferably, the switching unit 25 includes a switching circuit 250 having:
- a first terminal T1 and a second terminal T2 electrically connected to the first charging port 21 and the second charging port 22, respectively;
- a first electric node N1 and a second electric node N2 electrically connected to the corresponding first power transmission bus 4 and the corresponding second power transmission bus 5, respectively.

The switching unit comprises a first switch S1 having its power terminals electrically connected between the first electric node N1 and the first terminal T1, a second switch S2 having its power terminals electrically connected between the second electric node N2 and the second terminal T2 and a third switch S3 having its power terminals electrically connected between the first and second electric nodes N1, N2.

As mentioned above, the switches S1, S2 S3 of the switching unit 25 are controllable by the control means 20 of the respective charging module 2, which can command them to take an interdiction state OFF or a conduction state ON, depending on the switching configuration desired for the switching unit 25.

Figures 3-8 schematically show the operation of the switching unit 25 of a charging module 2 under the control of the respective control means 20.

Referring to figure 3, it is shown an operating condition in which the switching unit 25 takes the first switching configuration SC1. In this case, the first charging port 21 is electrically connected to the first power transmission bus 4 and both the first and second charging ports 21, 22 are electrically disconnected from the second power transmission bus 5.

In order to make the switching unit 25 take this switching configuration, the control means 20 have commanded the first switch S1 to switch in a conduction state and the second and third switches S2, S3 to switch in an interdiction state.

When the switching unit 25 takes this switching configuration, the second charging port 22 is not fed while the first charging port 21 can provide only the DC output power transmitted by the first power transmission bus 4.

The switching unit 25 may be conveniently commanded to take the first switching configuration SC1, when a single electric vehicle is electrically connected to the charging module 2 (namely to the first charging port 21) and a relatively low DC output power is desired or required to charge said electric vehicle.

Referring to figure 4, it is shown an operating condition in which the switching unit 25 takes the second switching configuration SC2. In this case, the second charging port 22 is electrically connected to the second power transmission bus 5 and both the first and second charging ports 21, 22 are electrically disconnected from the first power transmission bus 4.

In order to make the switching unit 25 take this switching configuration, the control means 20 have commanded the second switch S2 to switch in a conduction state and the first and third switches S1, S3 to switch in an interdiction state.

When the switching unit 25 takes this switching configuration, the first charging port 21 is not fed while the second charging port 21 can provide only the DC output power transmitted by the second power transmission bus 5.

The switching unit 25 may be conveniently commanded to take this switching configuration, when a single electric vehicle is electrically connected to the charging module 2 (namely to the second charging port 22) and a relatively low DC output power is desired or required to charge said electric vehicle.

Referring to figure 5, it is shown an operating condition in which the switching unit 25 takes the third switching configuration SC3. In this case, the first charging port 21 is electrically connected to both the first and second power transmission buses 4, 5 and the second charging port 22 is electrically disconnected from both the first and second power transmission buses 4, 5.

In order to make the switching unit 25 take this switching configuration, the control means 20 have commanded the first and third switches S1, S3 to switch in a conduction state and the second switch S2 to switch in an interdiction state.

When the switching unit 25 takes this switching configuration, the second charging port 22 is not fed while the first charging port 21 can provide all the DC output power transmitted by both the first and second power transmission buses 4, 5.

The switching unit 25 may be conveniently commanded to take this switching configuration, when a single electric vehicle is electrically connected to the charging module 2 (namely to the first charging port 21) and a relatively high DC output power is desired or required to charge said electric vehicle.

Referring to figure 6, it is shown an operating condition in which the switching unit 25 takes the fourth switching configuration SC4. In this case, the second charging port 22 is electrically connected to both the first and second power transmission buses 4, 5 and the first charging port 21 is electrically disconnected from both the first and second power transmission buses 4, 5. In order to make the switching unit 25 take this switching configuration, the control means 20 have commanded the second and third switches S2, S3 to switch in a conduction state and the first switch S1 to switch in an interdiction state.

When the switching unit 25 takes the fourth configuration SC4, the first charging port 21 is not fed while the second charging port 22 can provide all the DC output power transmitted by both the first and second power transmission buses 4, 5.

The switching unit 25 may be conveniently commanded to take this switching configuration, when a single electric vehicle is electrically connected to the charging module 2 (namely to the first charging port 21) and a relatively high DC output power is desired or required to charge said electric vehicle.

Referring to figure 7, it is shown an operating condition in which the switching unit 25 takes the fifth switching configuration SC5. In this case, the first charging port 21 is electrically connected to the first power transmission bus 4 and it is electrically disconnected to the second power transmission bus 5 while the second charging port 22 is electrically connected to the second power transmission bus 5 and it is electrically disconnected from the first power transmission bus 4.

In order to make the switching unit 25 take this switching configuration, the control means 20 have commanded the first and second switches S1, S2 to switch in a conduction state and the third switch S3 to switch in an interdiction state.

When the switching unit 25 takes this switching configuration, the first charging port 21 can provide the DC output power that can be transmitted along the first power transmission bus 4 while the second charging port 21 can provide the DC output power that can be transmitted along the second power transmission bus 5.

The switching unit 25 may be conveniently commanded to take the second switching configuration SC2, when two electric vehicles are electrically connected to the charging module 2, namely to the first and second charging ports 21, 22.

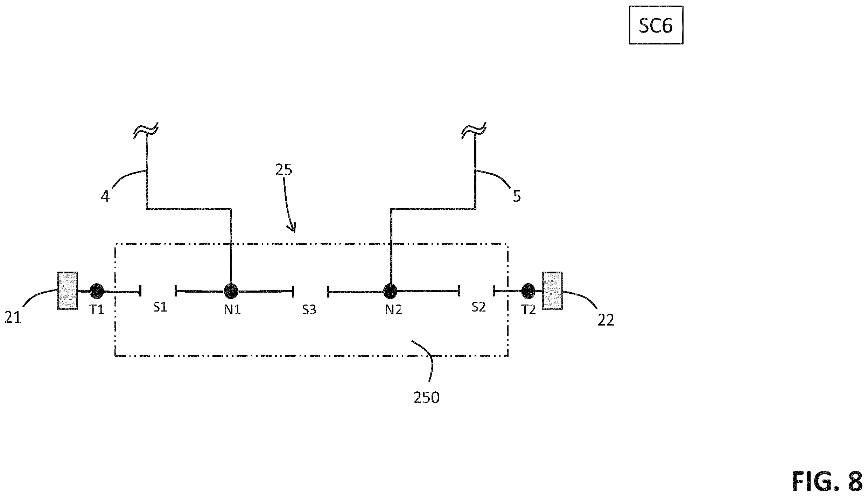

Referring to figure 8, it is shown an operating condition in which the switching unit 25 takes the sixth switching configuration SC6. In this case, both the first and second charging ports 21, 22 are electrically disconnected from both the first and second power transmission buses 4, 5. In order to make the switching unit 25 take this switching configuration, the control means 20 have commanded the first, second and third switches S1, S2, S3 to switch in an interdiction state.

When the switching unit 25 takes this switching configuration, both the first and second charging ports 21, 22 are not fed.

The switching unit 25 may be conveniently commanded to take this switching configuration, when no electric vehicles are electrically connected to the charging module 2.

It is evidenced that, when the switching unit 25 takes anyone of the above-illustrate switching configurations, the first and second power transmission buses 4, 5 are always galvanically insulated. This circumstance is particularly important when the switching unit 25 takes the fifth switching configuration SC5. In this case, in fact, the galvanic insulation between two electric vehicles electrically connected to the charging module 2 is ensured, even if the electric vehicles are charged in parallel.

### EXAMPLE

In the following, an example of operation of the charging station 1 including a single feeding assembly and a single charging module is briefly described with particular reference to the switching functionalities provided by the switching unit 25.

The feeding assembly 3 of the charging station 1 is supposed to be capable of providing a maximum DC power of 300 kW to the charging module 2 while each power transmission bus is supposed to be capable of delivering a DC power of 150 kW at most.

Initially, it is supposed that no electric vehicles are coupled to the charging module 2.

In this case, the switching unit 25 is in the sixth switching configuration SC6, so that both the first and second charging ports 21, 22 are not fed and are galvanically insulated from the power transmission buses 4, 5.

It is now supposed that a first electric vehicle arrives and couples to first charging port 21.

If no high DC power levels are desired for charging the first electric vehicle (e.g. depending on the operating conditions of this latter), the control means 20 of the charging module 2 will command the switching unit 25 to switch from the sixth switching configuration SC6 to the first switching configuration SC1.

In this way, the first charging port 21 is fed by the first power transmission bus 4 while the second charging port 22 is not fed. The first electric vehicle can be charged with a maximum DC power of 150 kW.

If high DC power levels are desired for charging the first electric vehicle, the control means 20 of the charging module 2 will command the switching unit 25 to switch from the sixth switching configuration SC6 to the third switching configuration SC3.

In this way, the first charging port 21 is fed by both the first and second power transmission buses 4, 5 while the second charging port 22 is not fed.

The first electric vehicle can be charged with a maximum DC power of 300 kW. All the DC power deliverable by the feeding assembly 3 can thus be employed for charging the first electric vehicle.

It is now supposed that a second electric vehicle arrives and couples to second charging port 22 while the first electric vehicle is still under charge.

The control means 20 of the charging module 2 will command the switching unit 25 to switch from the first switching configuration SC1 or the third switching configuration SC3 to the fifth switching configuration SC5.

In this way, the first charging port 21 is fed by the first power transmission bus 4 and the second charging port 22 is fed by the second power transmission bus 5. A galvanic separation is still maintained between the power transmission buses 4, 5 and, therefore, between the electric vehicles coupled to the charging module 2.

Each electric vehicle can now be charged with a maximum DC power of 150 kW. This means that the DC power deliverable by the feeding assembly 3 (300 kW) is split between the power transmission buses 4, 5 for charging both the first and second electric vehicles.

It is now supposed that the first electric vehicle terminates its charging process and decouples from the first charging port 21 while the second electric vehicle is still under charge.

If no high DC power levels are desired for charging the second electric vehicle, the control means 20 of the charging module 2 will command the switching unit 25 to switch from the fifth switching configuration SC5 to the second switching configuration SC2.

In this way, the first charging port 21 is not fed while the second charging port 22 is fed by the second power transmission bus 5. The second electric vehicle can be charged with a maximum DC power of 150 kW.

If high DC power levels are desired for charging the second electric vehicle, the control means 20 of the charging module 2 will command the switching unit 25 to switch from the fifth switching configuration SC5 to the fourth switching configuration SC4.

In this way, the first charging port 21 is not fed while the second charging port 22 is fed by both the first and second Power transmission buses 4, 5.

The second electric vehicle can be charged with a maximum DC power of 300 kW. All the DC power deliverable by the feeding assembly 3 can be employed for charging the second electric vehicle.

It is now supposed that the second electric vehicle terminates its charging process and decouples from the second charging port 22. In the meanwhile, no new electric vehicles have arrived.

In this case, the control means 20 of the charging module 2 will command the switching unit 25 to switch from the fifth switching configuration SC5 to the sixth switching configuration SC6. Both the first and second charging ports 21, 22 are not fed and are galvanically insulated from the Power transmission buses 4, 5.

The charging station 1 can be implemented on the field according to a number of different ways depending on the installation requirements.

In figures 1, 9-14 some embodiments of a charging station 1 including a single feeding assembly 3, a single charging module 3 and a single pair of power transmission buses 4, 5 are shown.

Figure 1 shows an embodiment of the invention, in which the feeding assembly 3 comprises a first main feeding module 31 and a second main feeding module 32 electrically connected to the charging module 2.

The first and second main feeding module 31, 32 include the first and second feeding ports 36, 37, respectively. These latter are electrically connected to the switching unit 25 of the charging module 2 through the first and second power transmission buses 4, 5, respectively.

The first feeding port 36 is electrically connected to the power conversion means 38 of the first main feeding module 31 while the second feeding port 27 is electrically connected to the power conversion means 38 of the second main feeding module 32. Obviously, the first feeding port 36 and the power conversion means 38 of the first main feeding modules 31 are electrically insulated from the second feeding port 37 and the power conversion means 38 of the second main feeding modules 32.

Preferably, the first feeding module 31 is enclosed in a first self-standing power cabinet, the second feeding module 32 is enclosed in a second self-standing power cabinet, which is distinct from the power cabinet of the first feeding module 31, while the charging module 2 is enclosed in a self-standing charging post.

According to possible variant embodiments (not shown), the first and second feeding modules 31, 32 may be enclosed in a same power cabinet.

According to further possible variant embodiments (not shown), the first and second feeding modules 31, 32 and the charging module 2 may be enclosed in a same cabinet structure.

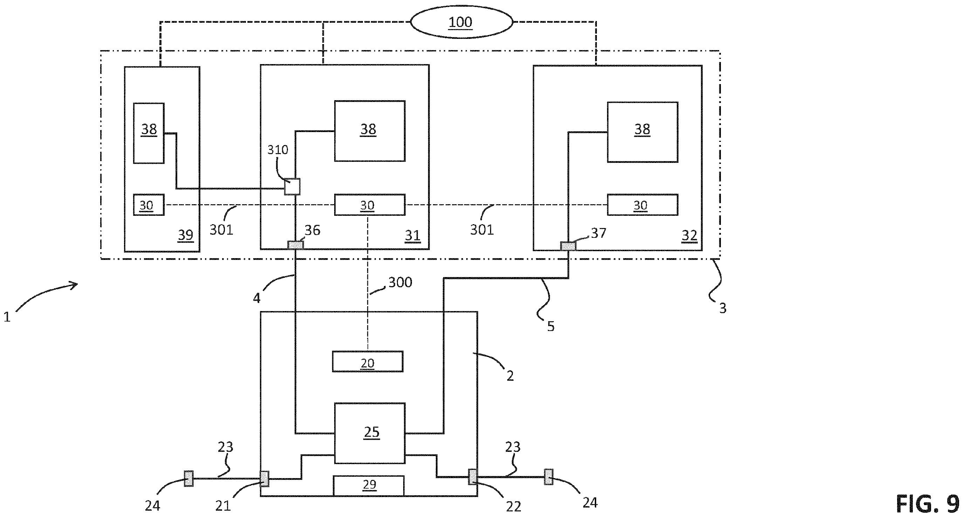

Figures 9-13 show embodiments of the invention, in which the feeding assembly 3 comprises one or more additional feeding modules 39 electrically connected to the first feeding module 31 or the second feeding module 32 or to both the first and second feeding modules.

In the embodiment shown in figure 9, an additional feeding module 39 is electrically connected to the first main feeding module 31 only. The power conversion means 38 of the first main feeding module 31 and of the additional feeding module 39 are electrically connected in parallel to the first feeding port 36 of the first main feeding module 31 through a suitable switch matrix 310 of the first main feeding module 31, which is controlled by the control means 30 of this latter.

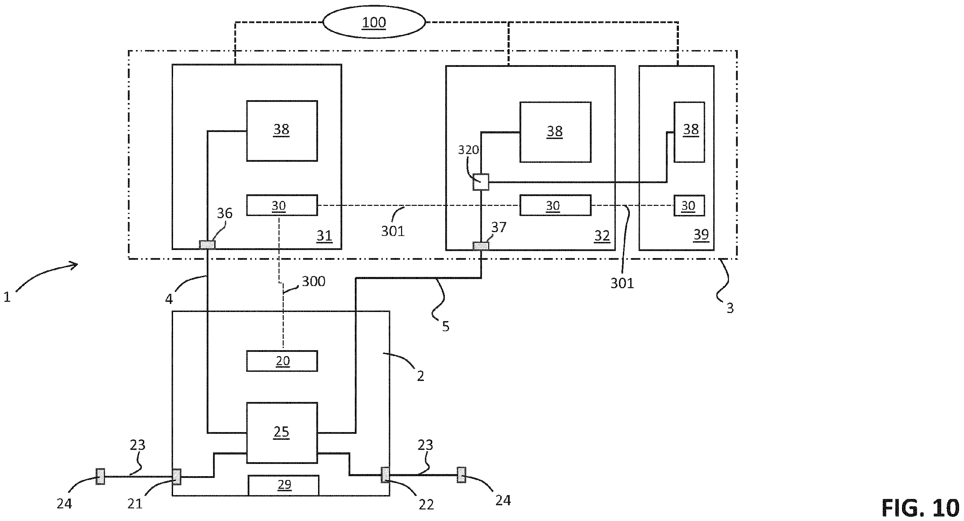

In the embodiment shown in figure 10, an additional feeding module 39 is electrically connected to the first main feeding module 32 only. The power conversion means 38 of the second main feeding module 32 and of the additional feeding module 39 are electrically connected in parallel to the second Feeding port 37 of the second main feeding module 32 through a switch matrix 320 of the second main feeding module 32, which is controlled by the control means 30 of this latter.

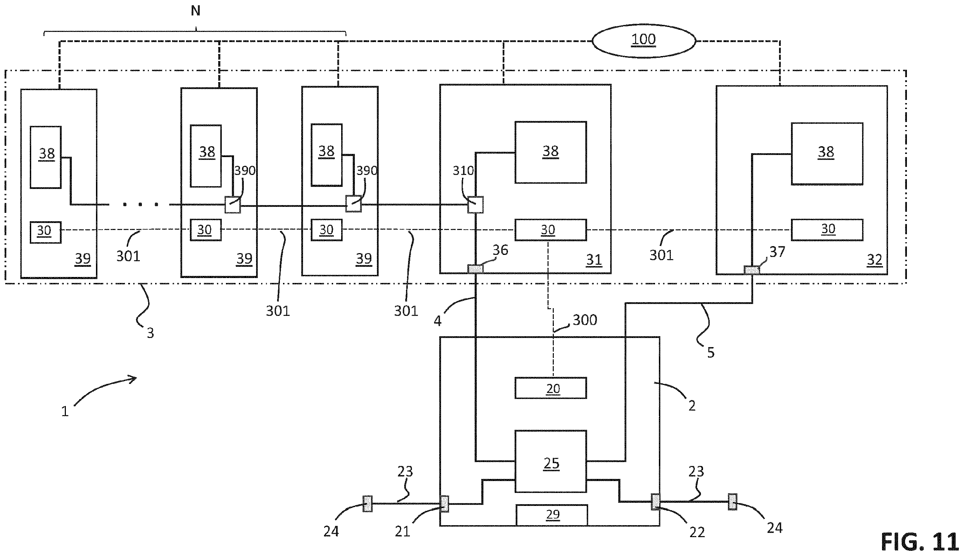

In the embodiment shown in figure 11, a number N (N >1) of additional feeding modules 39 is electrically connected to the first main feeding module 31 only.

The power conversion means 38 of the additional feeding modules 39 are electrically connected in series according to a daisy-chain configuration through suitable switch matrixes 390 included in N-1 additional feeding modules 39. Each switch matrix 390 is controlled by the control means 30 of the corresponding feeding module 39.

The power conversion means 38 of the first main feeding module 31 and the power conversion means 38 of the series of N additional feeding modules 39 are electrically connected in parallel to the first feeding port 36 of the first main feeding module 31 through a switch matrix 310 of the first main feeding module 31, which is controlled by the control means 30 of this latter.

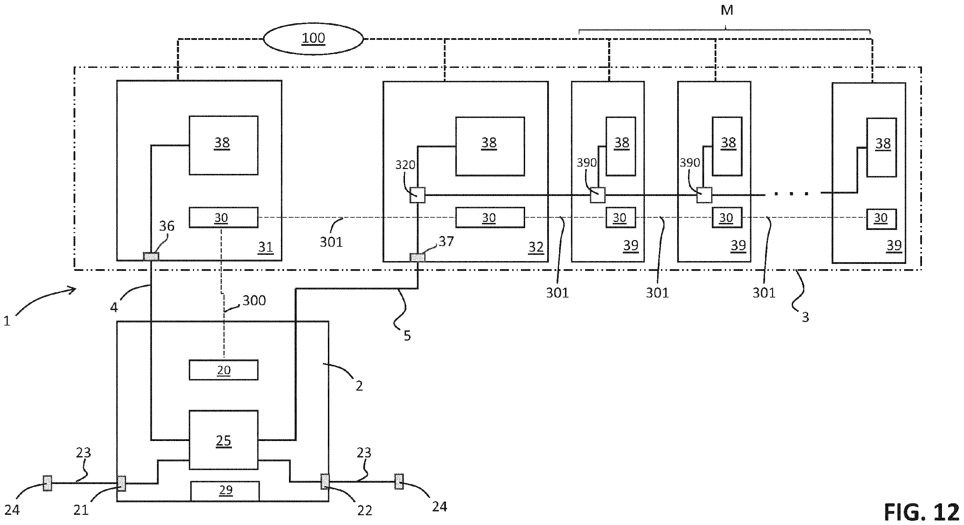

In the embodiment shown in figure 12, a number M (M >1) of additional feeding modules 39 is electrically connected to the second main feeding module 32 only.

The power conversion means 38 of the additional feeding modules 39 are electrically connected in series according to a daisy-chain configuration through suitable switch matrixes 390 included in M-1 additional feeding modules 39. Each switch matrix 390 is controlled by the control means 30 of the corresponding feeding module 39.

The power conversion means 38 of the second main feeding module 32 and the power conversion means 38 of the series of M additional feeding modules 39 are electrically connected in parallel to the second feeding port 37 of the second main feeding module 32 through a switch matrix 320 of the second main feeding module 32, which is controlled by the control means 30 of this latter.

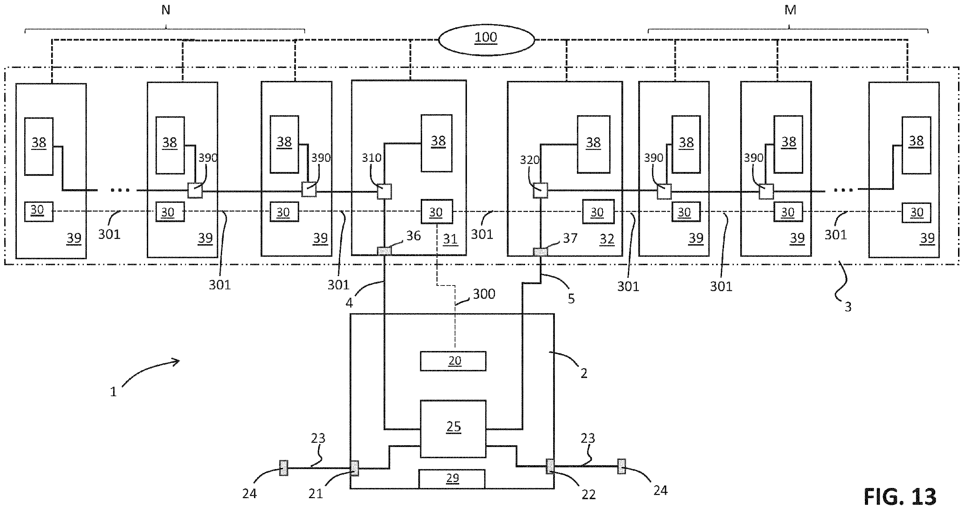

In the embodiment shown in figure 13, a number N (N >1) of additional feeding modules 39 is electrically connected to the first main feeding module 31 while a number M (M >1) of additional feeding modules 39 is electrically connected to the second main feeding module 32. The power conversion means 38 of each series of additional feeding modules 39 are electrically connected in series according to a daisy-chain configuration through suitable switch matrixes 390 included in M-1 additional feeding modules 39. Each switch matrix 390 is controlled by the control means 30 of the corresponding feeding module 39.

The power conversion means 38 of the first main feeding module 31 and the power conversion means 38 of the series of N additional feeding modules 39 are electrically connected in parallel to the first feeding port 36 of the first main feeding module 31 through a switch matrix 310 of the first main feeding module 31, which is controlled by the control means 30 of this latter. The power conversion means 38 of the second main feeding module 32 and the power conversion means 38 of the series of M additional feeding modules 39 are electrically connected in parallel to the second feeding port 37 of the second main feeding module 32 through a switch matrix 320 of the second main feeding module 32, which is controlled by the control means 30 of this latter.

In the above-illustrated embodiments of the invention, each additional feeding module 39 is enclosed in a corresponding self-standing power cabinet.

According to other possible variants, however, two or additional feeding modules 39 may be enclosed in a same cabinet structure, optionally together with each of the main feeding modules 31, 32 and, possibly, with the charging module 2.

Figure 14 shows an embodiment of the invention, in which the feeding assembly 3 comprises a single feeding module 31 electrically connected to the charging module 2. In this case, the feeding module 31 comprises both the first and second feeding ports 36, 37.

Conveniently, each feeding ports 36, 37 is electrically connected to corresponding group 38A, 38B of power conversion means 38.

The first and second feeding ports 36, 37 and the different groups 38A, 38B of power conversion means are electrically isolated one from another.

The different groups 38A, 38B of power conversion means are electrically connected to the respective Feeding ports 36, 37 through a suitable switch matrix 310 of the main feeding module 31, which is controlled by the control means 30 of this latter.

In this embodiment of the invention, the main feeding module 31 and the charging module 2 are enclosed in a same cabinet structure.

According to possible variants, however, the main feeding module 31 may be enclosed in a self-standing power cabinet while the charging module 2 may be enclosed in a self-standing charging post.

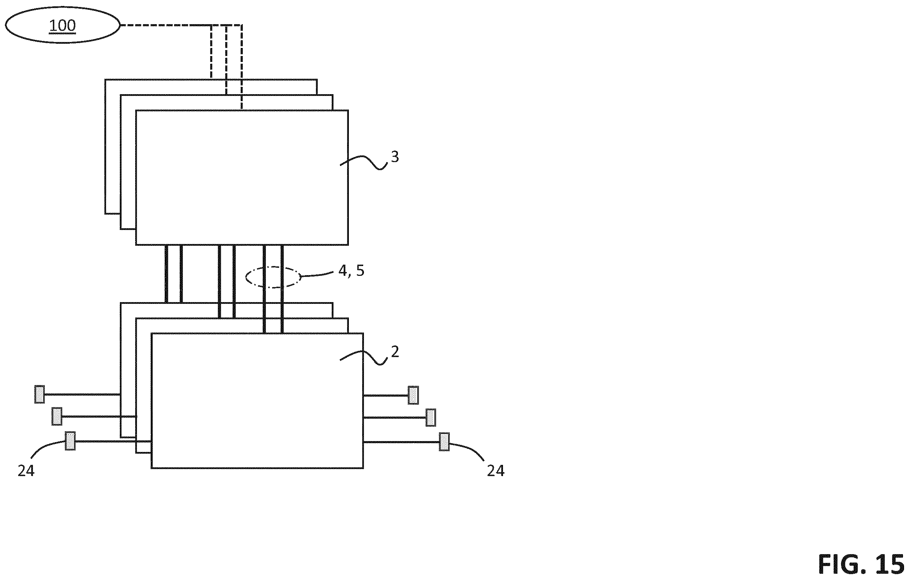

In the paragraphs above, the charging station 1 has been described above mainly referring to embodiments including a single feeding assembly 3, a single charging module 2 and a single pair of power transmission buses 4, 5. However, this does not intend to limit the scope of the invention in any way. The charging station 1 may, in fact, be realized according to embodiments including multiple power assemblies 3, multiple charging modules 2 and multiple pairs of power transmission buses 4, 5, in which each pair of power transmission buses electrically connects a feeding assembly 3 with a corresponding charging module 2 (figure 15).

In these embodiments of the invention, some modules or components of different feeding assemblies or different charging modules may be integrated one to another, according to the installation needs, even if they can provide the above-mentioned functionalities for each feeding assembly 3 or each feeding module 3.

As an example, the switching units 25, the control means 20 and the HMIs 29 of different charging modules 2 may be integrated in a single switching arrangement, a single control arrangement and a single HMI arrangement respectively.

The charging station 1, according to the present invention, may be subject to further variants and modifications still falling within the scope of the invention.

As mentioned above, according to some embodiments of the invention (not shown), each charging module 2 may comprise multiple pairs of charging ports.

In this case, when a pair of charging ports are used to charge one or two electric vehicles connected thereto, the remaining charging ports are conveniently deactivated (i.e. not fed anymore).

According to these embodiments of the invention, therefore, the switching unit 25 of the charging module 2 preferably includes multiple switching circuits 250, each coupled to a corresponding pair of charging ports. Each switching circuit 250 can be electrically connected in a selective manner, through suitable connection switches, to the power transmission buses 4,5.

Conveniently, the above-mentioned multiple pairs of charging ports may be designed to charge electric vehicles of different types, therefore according to different corresponding standards. According to other embodiments of the invention (not shown), the charging station may be arranged according to different layouts with respect to those described above, according to the installation requirements of the charging station.

When multiple main feeding modules 31, 32 are arranged in a feeding assembly 3, for example, a main feeding module 31 or 32 may be enclosed together with the corresponding charging module 2 in a same cabinet structure while one or more of the remaining feeding modules may be enclosed in self-standing power cabinets.

As another example, when a single feeding module 30 is arranged in a feeding assembly 3, such a feeding module may be electrically connected to one or more additional feeding modules. Each feeding module may be enclosed in a self-standing power cabinet while the charging module 2 may be enclosed in a self-standing charging post. Alternatively, the main feeding module 31, the additional feeding modules and the charging module 2 may be enclosed in a same cabinet structure.

As the skilled person, in consideration of the fully modular structure of the charging station 1, additional variant embodiments may be arranged still falling within the scope of the invention. It has been found that the electric charging station 1, according to the invention, fully achieves the intended aim and objects.

Since it allows two electric vehicles to be electrically charged in parallel or a single electric vehicle to be charged by fully exploiting the electric power made available by the whole feeding assembly 3, the charging station 1 provides top level performances in terms of charging efficiency of the electric vehicles.

At the same time, the charging station 1 ensures that possible electric vehicles electrically connected to the charging module 2 are always galvanically insulated one from another, thereby being fully compliant with the international standards in terms of safety.

The charging station 1 shows high levels of flexibility during the charging process of the electric vehicles. The DC output power made available for charging a given electric vehicle may be easily regulated in real time according to the actual operating status of said electric vehicle.

Thanks to a modular structure, the charging station 1 shows high levels of flexibility in installation as it may be easily configured on the field according to the requirements of the charging facility where the charging station has to be installed.

The charging station 1 has proven to be relatively easy and inexpensive to manufacture at industrial levels.

## Claims

1. An electric charging station (1) for electric vehicles, said charging station comprising:
- one or more charging modules (2), each charging module comprising a switching unit (25) and at least a pair of charging ports including a first charging port (21) and a second charging port (22) electrically connected to said switching unit, each charging port being electrically connectable to an electric vehicle for charging an electric battery of said electric vehicle;
- one or more feeding assemblies (3), each feeding assembly being electrically connected to an electric grid (100) and to a charging module (2) and including one or more feeding modules (31, 32, 39), each feeding module including power conversion means (38) to convert AC electric power received from an electric grid (100) into DC electric power to be used for feeding said charging module;
**characterised in that** said charging station (1) comprises one or more pairs of power transmission buses (4, 5), each pair of power transmission buses comprising a first power transmission bus (4) electrically connected to a first feeding port (36) of a feeding assembly (3) and to a switching unit (25) of a charging module (2) and a second power transmission bus (5) electrically connected to a second feeding port (37) of said feeding assembly and to said switching unit (25), said first and second power transmission buses being electrically isolated one from another and arranged in parallel to connect electrically said feeding assembly (3) to said charging module (2), wherein, for each pair of charging ports (21, 22) of said charging module (2), said switching unit (25) is adapted to:
- connect or disconnect electrically said first power charging port (21) to or from said first power transmission bus (4);
- connect or disconnect electrically said first power charging port (21) to or from both said first and second power transmission buses (4, 5);
wherein, for each pair of charging ports (21, 22) of said charging module (2), said switching unit (25) is adapted to:
- connect or disconnect electrically said second power charging port (22) to or from said second power transmission bus (5);
- connect or disconnect electrically said second power charging port (22) to or from both said first and second power transmission buses (4, 5).

2. Electric charging station, according to claim 1, **characterised in that**, for each pair of switching ports (21, 22) of said charging module (2), said switching unit (25) is adapted to take:
- a first switching configuration (SC1), in which said switching unit (25) electrically connects said first charging port (21) to said first power transmission bus (4) and electrically disconnects said first and second charging ports (21, 22) from said second power transmission bus (5); or
- a second switching configuration (SC2), in which said switching unit (25) electrically connects said second charging port (22) to said second power transmission bus (5) and electrically disconnects said first and second charging ports (21, 22) from said first power transmission bus (4); or
- a third switching configuration (SC3), in which said switching unit (25) electrically connects said first charging port (21) to both said first and second power transmission buses (4, 5) and electrically disconnects said second charging port (22) from both said first and second power transmission buses (4, 5); or
- a fourth switching configuration (SC4), in which said switching unit (25) electrically connects said second charging port (22) to both said first and second power transmission buses (4, 5) and electrically disconnects said first charging port (21) from both said first and second power transmission buses (4, 5);
- a fifth switching configuration (SC5), in which said switching unit (25) electrically connects said first charging port (21) to said first power transmission bus (4), electrically disconnects said first charging port (21) from said second power transmission bus (5), electrically connects said second charging port (22) to said second power transmission bus (5) and electrically disconnects said second charging port (22) from said first power transmission bus (5);
- a sixth switching configuration (SC6), in which said switching unit (25) electrically disconnects both said first and second charging ports (21, 22) from both to said first and second power transmission buses (4, 5).

3. Electric charging station, according to one of the previous claims, **characterised in that** said switching unit (25) includes, for each pair of charging ports (21, 22) of said charging module (2), a switching circuit (250) having:
- a first terminal (T1) and a second terminal (T2) electrically connected to said first charging port (21) and said second charging port (22), respectively;
- a first electric node (N1) and a second electric node (N2) electrically connected to said first power transmission bus (4) and said second power transmission bus (5), respectively;
- a first switch (S1) having power terminals electrically connected between said first electric node (N1) and said first terminal (T1);
- a second switch (S2) having power terminals electrically connected between said second electric node (N2) and said second terminal (T2);
- a third switch (S3) having power terminals electrically connected between said first and second electric nodes (N1, N2).

4. Electric charging station, according to one of the previous claims, **characterised in that** each feeding assembly (3) comprises a first main feeding module (31) and a second main feeding module (32) electrically connected to said charging module (2), said first and second main feeding modules including said first and second Feeding ports (36, 37), respectively.

5. Electric charging station, according to claim 4, **characterised in that** said first feeding module (31) is enclosed in a first power cabinet, said second feeding module (32) is enclosed in a second power cabinet and said charging module (2) is enclosed in a charging post.

6. Electric charging station, according to one of the claims from 4 to 5, **characterised in that** each feeding assembly (3) comprises one or more additional feeding modules (39) electrically connected to said first main feeding module (31) or said second main feeding module (32) or both said first and second main feeding modules.

7. Electric charging station, according to claim 6, **characterised in that** each additional feeding module (39) is enclosed in a corresponding power cabinet.

8. Electric charging station, according to one of the previous claims, **characterised in that** each feeding assembly (3) comprises a single main feeding module (31) electrically connected to said charging module (2), said main feeding module including both said first and second feeding ports (36, 37).

9. Electric charging station, according to claim 8, **characterised in that** said main feeding module (31) and said charging module (2) are enclosed in a same cabinet structure.

10. Electric charging station, according to claim 8, **characterised in that** said main feeding module (31) is enclosed in a power cabinet and said charging module (2) is enclosed in a charging post.

11. An electric charging facility for electric vehicles **characterised in that** it comprises at least an electric charging station (1), according to one or more of the previous claims.
